# EUROPEAN PATENT SPECIFICATION

(11) **EP 2 426 504 B1**
(45) Date of publication and mention of the grant of the patent: **17.04.2013**
(21) Application number: 10290475.2
(22) Date of filing: 06.09.2010
(51) Int. Cl.: G01S 5/02, G01S 5/06, G01S 5/14, H04W 64/00

(54) **Distance measurements for localization of mobile terminals in a radio network**
Entfernungsmessungen zur Ortung von mobilen Endgeräten in einem Funknetzwerk
Mesures de la distance pour la localisation de terminaux mobiles dans un réseau radio

(43) Date of publication of application: 07.03.2012
(73) Proprietor: Alcatel Lucent, 75007 Paris (FR)
(72) Inventor: Karla, Ingo, 46514 Schermbeck (DE); MacDonald, William, 08833 Lebanon, NJ (US)
(74) Representative: Wetzel, Emmanuelle

(56) References cited:
- WO-A1-97/27711
- WO-A1-99/31921
- US-A1- 2004 097 190
- US-B1- 6 477 380

## Description

### Field of the Invention

The invention relates to the field of telecommunications, and, more specifically, to distance measurements for localization of mobile terminals in radio (access) networks.

### Background

This section introduces aspects that may be helpful in facilitating a better understanding of the invention. Accordingly, the statements of this section are to be read in this light and are not to be understood as admissions about what is in the prior art or what is not in the prior art.

There is a large demand for precise and very accurate localization (i.e. position determination) of users of mobile terminals in cellular networks. When precise localization information for mobile terminals is available, it may enhance the precision of existing applications requiring localization information, and, in particular, may enable new applications which were not possible (or not worth the effort) before.

For example, several higher layer applications (e.g. emergency service localization, user applications which need to know the precise position of the user) would benefit from being able to know the position of the user with a higher precision. So far, only rough estimates of the position of a user located indoors can be used.

Moreover, in so-called self-organizing networks (SON networks), SON algorithms for several use cases may largely benefit from being able to include precise localization information in their decision metric. Such SON use cases include - but are not limited to - load balancing, handover optimization and coverage and capacity optimization.

SON algorithms do not yet use localisation information (due to the lack of the availability of precise information); i.e., at present only "standard" SON algorithms are used which are not able to benefit from the advantages which could be obtained when being able to use additional localization information. For example, precise localization information will allow SON algorithms to exploit the performance benefits of considering localization information in their decision metric. As another example, the recently started LTE SON project "Drive Test Substitution" would greatly benefit from being able to obtain mobile measurements with a much better localization accuracy.

Furthermore, the availability of precise localization information may be used to detect and avoid certain effects which occur at a certain location. For example, when it is detected that at the corner of a large building, the handovers between cells often fail because the radio connection between cells switches quickly, then the system may use self-learning to decide that at this precise location a handover must be preformed immediately. For such decisions, precise localization information is needed in a radio access network.

Simple, currently used localization techniques only provide a rough indication of the position of a mobile terminal, e.g. for determining to which cell or sector the mobile terminal belongs to. For instance, using the timing advance setting of the mobile terminal only provides the radio-distance to the serving base station, i.e. to that base station the timing advance is used for. Therefore, the information thus provided is only circular radius information within the antenna sector, such that the distance measurement via the timing advance + antenna direction is one example which provides only very rough position information.

One way to localize mobile terminals with higher precision is satellite based signalization, such as GPS. However, most mobile voice and data calls are made indoors which complicates the localization process, as standard satellite based localization processes such as GPS do not work indoors. Moreover, GPS may consume a lot of energy in the mobile terminals and only some mobile terminals have a GPS receiver (which may be switched off).

For indoor users, a ground based localization technique is typically used to localize the mobile terminal. In general, ground based localization techniques work by measuring some signal attribute and are limited by the signal to noise plus interference ratio (SNIR) of this measurement. Calibration is also a big issue when time of flight is used for localization. In this case, all the cable lengths and delays in the network must be calibrated out, which is not a trivial task.

An existing solution for ground-based uplink localization relies on an overlay network of GPS-synchronized Location Measurement Units (LMU). The LMUs are essentially very sensitive synchronous receivers that measure a particular signal from the mobile terminal. Since the LMUs form an overlay network, the coupling between the overlay network and the data delivery network typically does not work very well, as the LMUs do not necessarily know what time slots the base stations will assign. Moreover, LMUs are a very expensive way to increase the accuracy of position measurements, as these constitute additional technical equipment which has to be installed in the field.

Thus, there remains the challenge to obtain the position of mobile users with a much better accuracy than it is currently available, respectively, with reduced cost. In particular, solutions are searched for which improve the signal quality (SNR) of the uplink signals sent from the mobile terminals.

US 6,477,380 B1 discloses a system and method for estimating the location of a (single) mobile station based on a cooperation of several base stations. The base stations measure the (stabilized) receipt levels of the radio wave radiated by the mobile station and measure the distance to the mobile station based upon the propagation time of the radio wave. A position manage center estimates the location of the mobile station based upon a point or several points given by the circles defined using the distances.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a method for performing distance measurements to localize mobile terminals in a radio network, the method comprising: assigning a time slot for the emission of at least one distance measuring signal to at least one mobile terminal to be localized, and emitting, by those mobile terminals of the radio network which are served by base stations of a localization cluster susceptible of receiving the at least one distance measuring signal, only the at least one distance measuring signal and no other data traffic during the dedicated time slot.

One aspect of the present invention is to increase largely the accuracy of mobile terminal localization by enabling the uplink distance measuring signals to be received with a much better SNR (/SINR), such that these signals can be received by more base stations than before. This can be achieved in the network by assigning and scheduling a dedicated time or time slot for localization, i.e. a time or time slot which is reserved for (uplink) transmissions of distance measuring signals from a plurality of mobile terminals of a localization cluster. During that specific time slot, no other (uplink) data transmission in the localization cluster takes place, i.e. the time slot is only used to listen to distance measuring signals which are emitted by the mobile terminals served by the base stations of the localization cluster. The localization cluster typically only comprises base stations susceptible of receiving distance measuring signals emitted by the one or more mobile terminals to be localized.

Receiving, in this context, implies sufficient SNR for the base station to detect and process the distance measuring signal. It will be understood that mobile terminals arranged in the radio network which do not form part of the localization cluster are not affected by the localization procedure and may transmit uplink data as usual.

One skilled in the art will appreciate that the expression "time slot" has a general meaning, indicating any suitable time interval which enables the localization. As one option, a dedicated time slot for the distance measuring signals may be defined which is not already used in the system. As another option, a "time slot" already present in the system may be used, e.g. one LTE symbol, slot, (sub-)frame etc. By assigning dedicated time slots for the localization, it is possible to "quiet" all but a selected number of mobile terminals to be localized, thereby increasing the SNIR at the base stations which receive the distance measuring signals.

Distance measurement signals emitted by different mobile terminals during the dedicated time slot should have minimal interference with each other. For this purpose, special orthogonal (or pseudo-orthogonal) codes / code sequences may be used as distance measurement signals in order to reduce the interference between the distance measurement signals emitted by different mobile terminals. The entire available (uplink) frequency band can be used for distance measurements during the dedicated time slot, allowing to select the frequency bands and the coding of the distance measurement signals such that their mutual interference at the receiving base stations is (theoretically) zero, even if a large number of mobile terminals has to be localized during the selected time slot. In this way, the SNR is improved, allowing further, more distant base stations to be able to still detect an individual distance measuring signal, so that more base stations may participate in the position calculation.

In one variant, distance measuring signals of different mobile terminals are emitted with different codes, in particular with different orthogonal codes. If the position of more than one single mobile terminal has to be determined at the same point of time / time slot, different "signal-codes" have to be used for the distance measuring signals of the different mobile terminals, so that the base stations can distinguish the distance measuring signals emitted by different mobile terminals by their codes and may thus determine from which mobile terminal a particular distance measuring signal has been emitted.

The code assignment is ideally performed in such a way that the distance measuring signal can be uniquely attributed to a particular mobile terminal. It will be understood that the distance measuring signal may itself be a code / a code sequence chosen from a plurality of possible codes / code sequences (see below). Alternatively, the code may be a (pseudo-)random code which is chosen from a pool of codes or the code may be derived from a combination of an ID of the mobile terminal and an ID of the serving base station.

Typically, an individual code is assigned by the serving base station for each time slot. In a distributed network, the serving base station may then request that all of the base stations in the cluster listen to the unique code(s) from one or more of its served mobile terminals during that time slot. Alternatively, the mobile terminal has already a (pre-set) code which it uses for a plurality of subsequent time slots when it is triggered by the serving base station to emit the distance measuring signal. In another embodiment, the mobile terminal itself selects a code and informs the serving base station about the chosen code.

In another variant, the method further comprises: receiving distance measuring signals of different mobile terminals in the base stations of the localization cluster, and assigning the received distance measuring signals to the different mobile terminals based on the different codes. The assignment may be performed in each of the listening base stations. In this case, each listening base station may also determine from which cell a specific distance measuring signal has been emitted and may then send the corresponding distance information only to the base station associated with that cell, e.g. via an X2-interface or via a core network.

In a further variant, for a specific mobile terminal, a specific code, and, in particular a bandwidth to be occupied by the specific code, is selected in dependence of a desired distance measurement accuracy. As indicated above, distance measuring signals may be implemented in the form of codes / code sequences. For instance, distance measuring signals may be implemented as pseudo random (noise) sequences, e.g. in the form of (orthogonal) Zadoff-Chu Sequences, about 600 different ones in a 10 MHz bandwidth for LTE, 300 ones for 5 MHz etc. Other examples are gold codes which are used for GPS localization, or maximal length Pseudo Random Noise sequences which are used in CDMA.

The bandwidth attributed to the codes may be selected depending on the number of mobile terminals to be localized in a given time slot. Of course, it is possible to make an individual attribution of specific codes (and specific bandwidths) to the mobile terminals based on the desired measurement accuracy, thus providing the flexibility to assign the best suited code to a particular mobile terminal.

In another variant, the distance measuring signals have at least one property allowing to determine a time of arrival at a receiving base station and/or a time-of-flight from the mobile terminal to be located to a receiving base station. In this variant, it is proposed to use distance measuring signals, which allow to derive a time of arrival in a multipath environment, and/or a time-of-flight, thus allowing to determine the propagated distance based on a modification of the signal shape over time. For instance, pseudo random (noise) sequences such as the above-mentioned "Zadoff-Chu Sequences" which are used in 3GPP-LTE to determine the distance between mobile terminals and the base station may be used as distance measuring signals. When using pseudo random noise sequences, a peak of the (auto-) correlation function indicates the delay time and allows to determine the time-of-flight of the signal. Typically, the time of flight can be used as a distance indication in synchronized networks or when the relative time difference between the involved base stations is known. As good synchronization may be difficult to achieve, for most terrestrial triangulation / localization applications, Time Difference of Arrival (TDOA) is used. This technique uses the time difference between the arrival times of one and the same distance measuring signal at different listening base stations. The TDOA technique does not require to determine the time-of-flight of the distance measuring signal, i.e. the point of time when the transmission started. However, the TDOA technique requires at least four base stations to perform the triangulation instead of three when using the time-of-flight technique. For both types of localization (TDOA and time-of-flight), the distance may be determined the more accurately the larger the used bandwidth for the selected code sequence and thus the better the received signal quality (like SNR) is.

In a further variant, the dedicated time slot is reserved periodically or the reservation is triggered by one of the base stations or one of the mobile stations. As indicated above, the serving base station may trigger the localization of one or more of its served mobile terminals by indicating a time or time slot for the emission of the distance measuring signals to the other base stations of the cluster. Of course, a mobile terminal may also trigger the localization procedure by requesting its serving base station to start the localization procedure. Alternatively, the mobile terminals may e.g. periodically emit a distance measuring signal, or uplink signals containing data traffic emitted by the mobile terminals may be used to perform the distance measurement in the base stations of the cluster.

A further aspect of the invention is implemented in a base station for a radio network, comprising: scheduling means for assigning a time slot for the emission of at least one distance measuring signal to at least one mobile terminal to be localized, and communication means for indicating the assigned time slot to other base stations of a localization cluster which are susceptible of receiving the at least one distance measuring signal. In this way, it can be ensured that only the at least one distance measuring signal and no other data traffic is emitted by the mobile terminals of the localization cluster during the assigned time slot. It will be appreciated that downlink transmissions from the base stations to the mobile terminals of the cluster may still take place during the assigned time slot, as typically, the uplink and downlink are separated in different frequency bands (Frequency Division Duplex, FDD) or different time slots (Time Division Duplex, TDD).

In one embodiment, the base station further comprises: code assignment means for assigning different codes, in particular different orthogonal codes, for the distance measuring signals of different mobile terminals. As indicated above, orthogonal codes can be used to distinguish the various mobile terminals, reducing interference and thus increasing the SNIR to achieve the desired accuracy while minimizing the impact on the data traffic.

In one improvement, the code assignment means is adapted to select, for a specific mobile terminal to be localized, a specific code, and in particular a bandwidth to be occupied by the specific code, in dependence of a desired distance measurement accuracy. As already indicated above, distance measuring signals may be chosen individually in such a way that the largest possible bandwidth can be exploited.

A further aspect of the invention is implemented in a mobile terminal, comprising: receiving means for receiving information indicating a time slot for emitting a distance measuring signal, code generation means for generating a specific code for distinguishing the distance measuring signal of the mobile terminal from distance measuring signals of other mobile terminals (of a localization cluster), and emission means for emitting only the distance measuring signal and no other data traffic in the assigned time slot using the specific code. As indicated above, the specific code may be an orthogonal code, and the distance measuring signal may be a code / code sequence, or alternatively, the code may be an identifier based on an ID of the mobile terminal and possibly also on an ID of the serving base station. The specific code may be a code which is pre-defined by the mobile terminal, in which case the mobile terminal reports the code to its serving base station for distribution to the base stations of the cluster which will listen to the distance measuring signal during the selected time slot.

In one embodiment, the receiving means is adapted / programmed for receiving information indicating the specific code to be generated by the code generation means. In this case, the mobile terminal receives information about the code to be generated from the serving base station. In particular, the base station may indicate which one of a plurality of orthogonal codes may be used by the mobile terminal as a distance measuring signal.

In another embodiment, the code generation means is adapted / programmed to generate the specific code with a desired bandwidth in dependence of a desired distance measurement accuracy. As indicated above, e.g. when using (pseudo-)orthogonal codes / code sequences, an increased bandwidth results in an increased distance measurement accuracy.

A further aspect of the invention relates to a radio network comprising a plurality of base stations of the type described above. The radio (access) network may in particular be a distributed network not having a central entity, such as a SON network. Of course, the network may also comprise one or more mobile terminals of the type described above.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of an embodiment of a radio network according to the invention, and
- **Fig. 2**: shows the dependence of a correlation (in dB) on delay for a (Long) Zadoff-Chu sequence used as a distance measuring signal.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

Ground based localization techniques can be divided into two categories: Those that rely on downlink measurements by the mobile terminals and those that rely on uplink measurements. In both methods, time-of-flight or time difference of arrival measurements are limited by the SNIR between the base stations and the mobile terminal(s) to be localized. In the downlink case, the mobile terminal has to deal with the interference of all the pulses or codes arriving at the mobile terminal if they all arrive at approximately the same time. In uplink localization, this is not a problem since it is possible that only one mobile terminal at a time is scheduled to be localized, or interference between signals emitted by different mobile terminals is minimized, as will be described in more detail below.

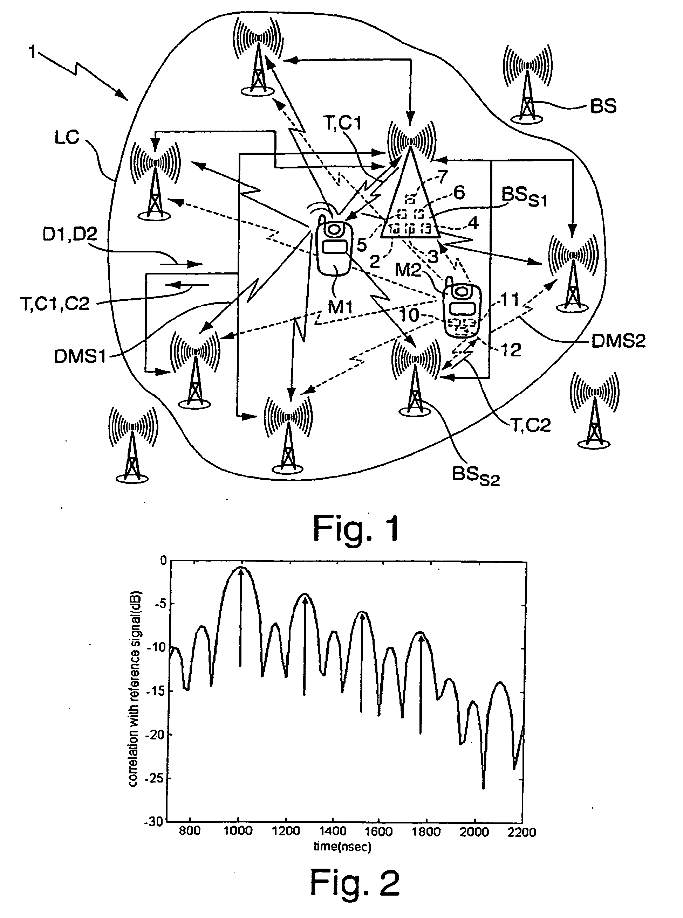

A radio network 1 in which an uplink localization technique is implemented is represented in **Fig. 1**. In the network 1, two serving base stations BS_{S1}, BS_{S2} direct traffic to a respective mobile terminal M1, M2 and require location information about the mobile terminals M1, M2. In the example of Fig. 1, the information for localizing the mobile terminals M1, M2 is derived from distance information D1, D2 obtained by the (serving) base stations BS_{S1}, BS_{S2}, ... in a local area of base stations forming a localization cluster LC. The distance information D1, D2 is provided by monitoring respective uplink signals emitted from the mobile terminals M1, M2, the uplink signals allowing to determine a distance to a respective base station BS_{S1}, BS_{S2},... of the localization cluster LC and are thus referred to as distance measuring signals DMS1, DMS2 in the following.

This decentralized localization process for the mobile terminal M1 will be explained in greater detail below for the example of the first serving base station BS_{S1}:
First of all, the serving base station BS_{S1} uses a generating means 2 for generating the localization cluster LC by selecting other base stations BS_{S2}, ... susceptible of receiving the distance measuring signal DMS1 to be emitted by the mobile terminals M1 to be localized. For this purpose, the serving base station BS_{S1} may use Neighbour Relation Tables (NRT), e.g. using all first and possibly all second order neighbour cells or base stations. It will be understood, however, that the localization cluster LC may also be modified dynamically using a self-learning algorithm, e.g. (temporally) excluding base stations BS which have not been able to detect the uplink signal several times.

For starting the localization process, the serving base station BS_{S1}, respectively, a scheduling means 3 thereof, assigns a time slot T for the emission of the distance measuring signal DMS1 to the mobile terminal M1 which is served by the base station BS_{S1}. The serving base station BS_{S1} then uses a transmission means 5 in the form of a transmitter (radio interface with antenna(s)), such that the information about the assigned time slot T can be transmitted to the mobile terminal M1, e.g. using a signaling message.

The serving base station BS_{S1} also contains a code assignment means 6 for assigning an individual code C1 to the distance measuring signal DMS1 of the first mobile terminal M1. The code C1 is also transmitted from the base station BS_{S1} to the mobile terminal M1 using the transmission means 5, typically in the same signaling message as the information about the time or time slot T for the emission. The (first) code C1 aims to distinguish the distance measuring signal DMS1 of the first mobile terminal M1 from a distance measuring signal DMS2 of the second mobile terminal M2 served by the second base station BS_{S2} and possibly of other mobile terminals (not shown).

The information about the time slot T and the code C1 is then provided to the other base stations BS_{S2}, ... of the localization cluster LC using a transferring means 7 for inter-cell communication, e.g. an X2-interface of the serving base station BS_{S1} (or a core network). Once the time slot T and code C1 is fixed by the first base station BS_{S1}, the further base stations, e.g. the second base station BS_{S2}, may also indicate that one or more of their associated mobile stations (e.g. mobile terminal M2) will send distance measuring signals during the time slot T. In the present example, the second base station BS₂ indicates to the other base stations BS_{S1}, ... a (second) code C2 which will be used by its served mobile terminal M2 for transmission of a distance measuring signal DMS2. It is also agreed upon by all of the base stations BS_{S1}, BS_{S2}, ... of the localization cluster LC that only distance measuring signals DMS1, DMS2 and no other data traffic is emitted by the mobile terminals M1, M2, ... served by the base stations BS_{S1}, BS_{S2} of the localization cluster LC during the time slot T.

All the base stations BS_{S1}, BS_{S2}, ... of the localization cluster LC use the information about the time slot T to set a listening time interval during which they will listen to the distance measuring signals DMS1, DMS2 emitted by the mobile stations M1, M2, .... During the listening time interval, all the base stations BS_{S1}, BS_{S2}, ... listen to at least one of an arrival time, a power level, an angle-of-arrival, and/or a shape of the distance measuring signals DMS1, DMS2.

Each of the base stations BS_{S1}, BS_{S2} may then, based on the modification of the distance measuring signal DMS1, DMS2 with time and/or on the measured run time, determine a distance to the respective mobile terminal M1, M2. For this purpose, the distance measuring signals DMS1, DMS2 can be distinguished in the base stations BS_{S1}, BS_{S2} based on the respective codes C1, C2.

As a code C1, C2, (pseudo-)random codes may be used. However, it is advantageous to use a distance measuring signal DMS1 in the form of a code / code (or pulse) sequence C1 which is (pseudo-)orthogonal with codes / code sequences C2, ... emitted by other mobile terminals M2, .... In this way, interference between different distance measuring signals DMS1, DMS2 emitted during the time slot T may be kept as low as possible.

Typically, each base station BS_{S1}, BS_{S2} randomly selects one out of many possible codes. When all of the selected codes of the base stations BS_{S1}, BS_{S2} of the localization cluster LC turn out to be different, everything is fine. However, when it is detected that there is a code-collision, i.e. that two or more of the selected codes are identical, typically one or more of the colliding codes are changed, hoping that at the next attempt, the code collision can be resolved. One skilled in the art will appreciate that there are several options for other - e.g. more advanced - variations of the random code selection and collision resolving techniques which will not be detailed herein.

Furthermore, it is particularly advantageous when the distance measuring signals DMS1, DMS2 are implemented as a code/pulse sequence which allows to determine an arrival time at a base station (in a multipath environment), and possibly also a time-of-flight from a respective mobile terminal M1, M2 to be located to a respective listening base station BS_{S1}, BS_{S2},... . The time-of-flight is typically determined based on a modification of a signal shape with time, the time-of-flight measurement allowing to determine the propagated distance (radio path). Localization of a mobile terminal based on distances determined by time-of-flight measurements requires good synchronization between the mobile terminal(s) and the base stations. Therefore, in order to localize a mobile terminal, Time Difference of Arrival (TDOA) may be used. This technique uses the time difference between the arrival times of one and the same distance measuring signal at different receiving base stations. The TDOA technique does not require to determine the time-of-flight of the distance measuring signal, i.e. the point of time when the transmission started need not be determined, such that precise synchronization of the mobile terminal to the base station network is not required. However, the TDOA technique requires at least four base stations to perform the triangulation, instead of three when using time-of-flight measurements.

One type of code sequence which may be used for this purpose is a pseudo random noise sequence, e.g. in the form of a (Long) Zadoff-Chu sequence. A pseudo random noise sequence may be formed either in the time domain or in the frequency domain. Zadoff-Chu sequences are formed in the frequency domain and are preferably used for distance measurements, as they have reasonable correlation characteristics in the presence of Gaussian white noise and in the presence of multipath.

**Fig. 2** shows a plot of the correlation between a Zadoff-Chu sequence and a reference signal (i.e. the same sequence) with three additional multipath components, spaced by 260 nsec, and in the presence of Gaussian white noise. The main peak at 1000 nsec is clearly distinguishable from the multipath components which decay exponentially with a multipath scale factor: exp(-scale factor * multipath index), such that the time of arrival may be unambiguously determined and may be used for the TDOA localization technique. Alternatively, by determining the delay time of the main peak of the auto-correlation function of the Zadoff-Chu sequence, the time-of-flight and thus the distance to the mobile terminal may be derived and used for the localization (provided that the base stations and mobile terminals are well synchronized). Moreover, Long Zadoff-Chu sequences (and typically also other pseudo random (noise) sequences) are orthogonal to each other such that when using different Long Zadoff-Chu sequences as distance measuring signals DMS1, DMS2, the occurrence of interference between these signals can be minimized.

Either the derived distance itself or data which allows determining the distance / the localization is then provided as distance measuring information D1, D2 from each base station (e.g. BS_{S1}) to the other base stations (e.g. BS_{S2}, BS_{S3}, ...) using the transferring means 7. Alternatively, a dedicated communication link may be established using protocol messages/Information elements in order to perform localization related communication between the base stations BS_{S1}, BS_{S2} , ... of the localization cluster LC.

The first base station BS_{S1} then uses a localization means 4 for localizing its served mobile terminal M1 based on the distance measuring information D1 received from the other base stations BS_{S2}, ... of the localization cluster LC and on the distance measuring signal DSM1 which it has itself received from the mobile terminal M1. Typically, localization is performed by using a triangulation algorithm. Of course, for determining the distance between the serving base station BS_{S1} and the mobile terminal M1, apart from the distance measuring signal DMS1, further information available in the serving cell (based on pilot signals etc.) may be taken into account. In this way, the location / position of the mobile terminal M1 can be determined with high precision.

As indicated above, time-of-flight measurements may be used to locate the mobile terminals M1, M2 via triangulation. The time-of-flight from at least three non-collocated base stations has to be measured in order for triangulation to be successful. Alternatively, the localization may be performed using the TDOA technique, requiring at least four non-collocated base stations. In both cases, more measurements may enhance the accuracy. In the localization process described above, the SNIR of the distance measuring signals DMS1, DMS2 received in more distant base stations or in base stations in which the uplink signal is obscured by shadowing may be increased, such that these may also participate in the localization process, enhancing its accuracy.

Another important aspect in providing accurate localization is the bandwidth of the distance measurement signals DMS1, DMS2, resp. the codes C1, C2. Typically, higher bandwidths result in more accurate localization since shorter sampling times are possible. Thus, codes C1, C2 having different bandwidth may be used for the mobile terminals M1, M2, the bandwidth being chosen in dependence of a desired distance measurement accuracy. For instance, when (orthogonal) Long Zadoff-Chu sequences are used, about 600 different ones may be used in a 10 MHz bandwidth for LTE, 300 ones for 5 MHz etc. Thus, the best suited code sequence for a mobile terminal to be localized can be chosen, allowing to perform the distance determination for that mobile terminal with the desired accuracy.

In the following, the (first) mobile terminal M1 which is to be localized will be described in greater detail: The mobile terminal M1 comprises receiving means 10 for receiving the assignment information indicating the time slot T for emitting its distance measuring signal DMS1, a code generation means 11 for generating the specific code C1 for distinguishing the distance measuring signal DMS1 from distance measuring signals of other mobile terminals (e.g. of the second terminal M2), and emission means 12 for emitting the distance measuring signal DMS1 in the assigned time slot T using the specific code C1.

In the description given above, the information indicating the specific code C1 to be used by the mobile terminal M1 has been provided by the (serving) base station BS_{S1} (for a given time slot T). However, it is also possible that the specific code is somehow predefined and valid for more than one distance determination / time slot, or that the mobile terminal M1 itself determines the code C1, e.g. based on the desired accuracy. In the latter case, the mobile terminal M1 informs the serving base station BS_{S1} about the code C1 which it intends to use.

One skilled in the art will appreciate that if the best accuracy for the localization is required, only one mobile terminal at a time (i.e. during a time slot T) should be localized. This is due to the fact that even though orthogonal codes are used as distance measuring signals, these signals may still act as interferers and reduce the SINR and thus reduce the accuracy. When only a single mobile terminal at a time has to be localized, the serving base station BS_{S1} may request / indicate to the other base stations BS_{S2}, ... that only one of its mobile terminals will be scheduled for uplink transmissions during the time slot T and that no other distance measuring signals are to be transmitted in the localization cluster LC during that time slot T.

As indicated above, the localization may be triggered by a particular base station or possibly a particular mobile terminal. The latter means for example, that when a mobile terminal starts a service for which a precise geographic position is required, its base station initiates a precise localization procedure for this mobile terminal - and possibly thereby also taking the opportunity to measure simultaneously the position of several or all other mobile terminals of the localization cluster LC. Alternatively, the point of time / time slot T for the localization may be pre-defined, e.g. periodically.

The time slot T for localization may be defined locally, e.g. in a decentralized way, within a certain local area. However, it is also possible that a localization time slot for a certain area is assigned by a central entity or even to define e.g. (periodic) network wide localization time slots.

In the way described above, the uplink localization signal may now propagate (theoretically) without experiencing any interference from any base station in the localization cluster LC. In other words, there is no other mobile terminal in the cluster which causes interference in any of the base stations of the cluster. Typical modern cellular networks, like e.g. LTE, are interference limited, and the interference situation determines how far a signal can propagate and with which signal quality it arrives at the receiver. With the absence of any interference, this distance measurement signals may now be received by much more base stations, and also with an improved signal quality (better SNR value).

These benefits allow to determine the position of the mobile terminals with a higher accuracy than before. In particular, the localization precision is so accurate that SON network management algorithms may take full benefit from considering localization information for their decisions. Using the process described above, no additional entities (such as LMUs) have to be deployed in the network. Furthermore, only a simple software update may be required to allow the mobile terminals to participate in the localization process described herein.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for performing distance measurements to localize mobile terminals (M1, M2) in a radio network (1), the method comprising:
assigning a time slot (T) for the emission of at least one distance measuring signal (DMS1, DMS2) to at least one mobile terminal (M1, M2) to be localized,
**characterized by**
emitting, by those mobile terminals (M1, M2) of the radio network (1) which are served by base stations (BS_{S1}, BS_{S2}, ...) of a localization cluster (LC) susceptible of receiving the at least one distance measuring signal (DMS1, DMS2), only the at least one distance measuring signal (DMS1, DMS2) and no other data traffic during the assigned time slot (T).

2. Method according to claim 1, wherein distance measuring signals (DMS1, DMS2) of different mobile terminals (M1, M2) are emitted with different codes (C1, C2).

3. Method according to claim 2, wherein the different codes (C1, C2) are different orthogonal codes.

4. Method according to claim 3, further comprising:
receiving distance measuring signals (DMS1, DMS2) of different mobile terminals (M1, M2) in the base stations (BS_{S1}, BS_{S2},...) of the localization cluster (LC), and
assigning the received distance measuring signals (DMS1, DMS2) to the different mobile terminals (M1, M2) based on the different codes (C1, C2).

5. Method according to claim 3 or 4, wherein for a specific mobile terminal (M1, M2), a specific code (C1, C2), and in particular a bandwidth to be occupied by the specific code (C1, C2), is selected in dependence of a desired distance measurement accuracy.

6. Method according to any one of the preceding claims, wherein the distance measuring signals (DMS1, DMS2) have at least one property allowing to determine a time of arrival at a receiving base station (BS_{S1}, BS_{S2},...) and/or a time-of-flight from the mobile terminal (M1, M2) to a receiving base station (BS_{S1}, BS_{S2},...).

7. Method according to any one of the preceding claims, wherein the assigned time slot (T) is reserved periodically or the reservation is triggered by one of the base stations (BS_{S1}, BS_{S2}) or by one of the mobil terminals (M1, M2).

8. Base station (BS_{S1}) for a radio network (1), comprising:
scheduling means (3) for assigning a time slot (T) for the emission of at least one distance measuring signal (DMS1, DMS2) to at least one mobile terminal (M1, M2) to be localized, and
communication means (7) for indicating the assigned time slot (T) to other base stations (BS_{S2},...) of a localization cluster (LC) which are susceptible of receiving the at least one distance measuring signal (DMS1, DMS2),
**characterized in that**
the communication means (7) is adapted to ensure that only the at least one distance measuring signal (DMS1, DMS2) and no other data traffic is emitted by the mobile terminals (M1, M2) of the localization cluster (LC) during the assigned time slot (T).

9. Base station according to claim 8, further comprising:
code assignment means (6) for assigning different codes (C1, C2), in particular different orthogonal codes, to the distance measuring signals (DMS1, DMS2) of different mobile terminals (M1, M2).

10. Base station according to claim 9, wherein the code assignment means (6) is adapted to select, for a specific mobile terminal (M1) to be localized, a specific code (C1), and in particular a bandwidth to be occupied by the specific code (C1), in dependence of a desired distance measurement accuracy.

11. Base station according to any one of claims 8 to 10, further comprising:
receiving means (9) for receiving distance measuring signals (DMS1, DMS2) of different mobile terminals (M1, M2), and
assignment means (8) for assigning the received distance measuring signals (DMS1, DMS2) to the different mobile terminals (M1, M2) based on the different codes (C1, C2).

12. Mobile terminal (M1), comprising:
receiving means (10) for receiving information indicating a time slot (T) for emitting a distance measuring signal (DMS1),
code generation means (11) for generating a specific code (C1) for distinguishing the distance measuring signal (DMS1) of the mobile terminal (M1) from distance measuring signals (DMS2, ...) of other mobile terminals (M2, ...), **characterized by**
emission means (12) for emitting only the distance measuring signal (DMS1) and no other data traffic in the assigned time slot (T) using the specific code (C1).

13. Mobile terminal according to claim 12,
wherein the receiving means (10) is adapted for receiving information indicating the specific code (C1) to be generated by the code generation means (11).

14. Mobile terminal according to claim 12 or 13,
wherein the code generation means (11) is adapted to generate the specific code (C1) with a desired bandwidth based on a desired distance measurement accuracy.

15. Radio network (1) comprising a plurality of base stations (BS_{S1}, BS_{S2}) according to any one of claims 8 to 11.

## Patentansprüche

1. Verfahren zur Durchführung von Entfernungsmessungen, um mobile Endgeräte (M1, M2) in einem Funknetzwerk (1) zu orten, wobei das Verfahren umfasst:
Zuordnen eines Zeitschlitzes (T) für die Ausgabe mindestens eines Entfernungsmesssignals (DMS1, DMS2) zu mindestens einem zu ortenden mobilen Endgerät (M1, M2),
**gekennzeichnet durch**
das Ausgeben, **durch** diejenigen mobilen Endgeräte (M1, M2) des Funknetzwerks (1), welche von Basisstationen (BS_{S1}, BS_{S2},...) eines Ortungsclusters (LC) bedient werden, die geeignet sind, mindestens ein Entfernungsmesssignal (DMS1, DMS2) zu empfangen, lediglich des mindestens einen Entfernungsmesssignals (DMS1, DMS2) und keines anderen Datenverkehrs während des zugeordneten Zeitschlitzes (T).

2. Verfahren nach Anspruch 1, wobei Entfernungsmesssignale (DMS1, DMS2) verschiedener mobiler Endgeräte (M1, M2) mit unterschiedlichen Codes (C1, C2) ausgegeben werden.

3. Verfahren nach Anspruch 2, wobei die unterschiedlichen Codes (C1, C2) unterschiedliche orthogonale Codes sind.

4. Verfahren nach Anspruch 3, weiterhin umfassend:
Empfangen von Entfernungsmesssignalen (DMS1, DMS2) verschiedener mobiler Endgeräte (M1, M2) an den Basisstationen (BS_{S1}, BS_{S2}, ...) des Ortungsclusters (LC), und
Zuordnen der empfangenen Entfernungsmesssignale (DMS1, DMS2) zu verschiedenen mobilen Endgeräten (M1, M2) auf Basis der unterschiedlichen Codes (C1, C2).

5. Verfahren nach Anspruch 3 oder 4, wobei für ein spezifisches mobiles Endgerät (M1, M2) ein spezifischer Code (C1, C2), und insbesondere eine von dem spezifischen Code (C1, C2) zu belegende Bandbreite, in Abhängigkeit von einer gewünschten Entfernungsmessungspräzision ausgewählt wird.

6. Verfahren nach einem beliebigen der vorstehenden Ansprüche, wobei die Entfernungsmesssignale (DMS1, DMS2) mindestens eine Eigenschaft aufweise, welche es ermöglicht, eine Ankunftszeit an einer empfangenden Basisstation (BS_{S1}, BS_{S2}...) und/oder eine Laufzeit von dem mobilen Endgerät (M1, M2) zu einer empfangenden Basisstation (BSₛ₁, BSₛ₂, ...) zu bestimmen.

7. Verfahren nach einem beliebigen der vorstehenden Ansprüche, wobei der zugeordnete Zeitschlitz (T) periodisch reserviert wird oder die Reservierung von einer der Basisstationen (BSₛ₁, BSₛ₂, ...) oder von einem der mobilen Endgeräte (M1, M2) ausgelöst wird.

8. Basisstation (BSₛ₁) für ein Funknetzwerk (1), umfassend:
Planungsmittel (3) zum Zuordnen eines Zeitschlitzes (T) für die Ausgabe mindestens eines Entfernungsmesssignals (DMS1, DMS2) zu mindestens einem zu ortenden mobilen Endgerät (M1, M2), und
Kommunikationsmittel (7) zum Anzeigen des zugeordneten Zeitschlitzes (T) an andere Basisstationen (BS_{S2},...) eines Ortungsclusters (LC), welche geeignet sind, das mindestens eine Entfernungsmesssignal (DMS1, DMS2) zu empfangen,
**dadurch gekennzeichnet, dass**
das Kommunikationsmittel (7) dazu ausgelegt ist, zu gewährleisten, dass lediglich das mindestens eine Entfernungsmesssignal (DMS1, DMS2) und kein anderer Datenverkehr von den mobilen Endgeräten (M1, M2) des Ortungsclusters (LC) während des zugeordneten Zeitschlitzes (T) ausgegeben wird.

9. Basisstation nach Anspruch 8, weiterhin umfassend:
Codezuordnungsmittel (6) zum Zuordnen unterschiedlicher Codes (C1, C2), insbesondere unterschiedlicher orthogonaler Codes, zu den Eritfernungsmesssignalen (DMS1, DMS2) verschiedener mobiler Endgeräte (M1, M2).

10. Basisstation nach Anspruch 9, wobei das Codezuordnungsmittel (6) dazu ausgelegt ist, für ein spezifisches zu ortendes mobiles Endgerät (M1) einen spezifischen Code (C1), und insbesondere eine von dem spezifischen Code (C1) zu belegende Bandbreite, in Abhängigkeit von einer gewünschten Entfernungsmessungspräzision auszuwählen.

11. Basisstation nach einem beliebigen der Ansprüche 8 bis 10, weiterhin umfassend:
Empfangsmittel (9) zum Empfangen von Entfernungsmesssignalen (DMS1, DMS2) unterschiedlicher mobiler Endgeräte (M1, M2), und
Zuordnungsmittel (8) zum Zuordnen der empfangenen Entfernungsmesssignale (DMS1, DMS2) zu den verschiedenen mobilen Endgeräten (M1, M2) auf Basis der unterschiedlichen Codes (C1, C2).

12. Mobiles Endgerät (M1), umfassend:
Empfangsmittel (10) zum Empfangen von Informationen, die einen Zeitschlitz (T) für die Ausgabe eines Entfernungsmesssignals (DMS1) angeben,
Codeerzeugungsmittel (11) zum Erzeugen eines spezifischen Codes (C1), um das Entfernungsmesssignal (DMS1) des mobilen Endgeräts (M1) von Entfernungsmesssignalen (DMS2, ...) anderer mobiler Endgeräte (M2, ...) zu unterscheiden, **gekennzeichnet durch**
Ausgabemittel (12), um lediglich das Entfernungsmesssignal (DMS1) und keinen anderen Datenverkehr während des zugeordneten Zeitschlitzes (T) unter Verwendung des spezifischen Codes (C1) auszugeben.

13. Mobiles Endgerät nach Anspruch 12,
wobei das Empfangsmittel (10) für den Empfang von Informationen, welche den von den Codeerzeugungsmittetn (11) zu erzeugenden spezifischen Code (C1) angeben, ausgelegt ist.

14. Mobiles Endgerät nach Anspruch 12 oder 13,
wobei das Codeerzeugungsmittel (11) für die Erzeugung des spezifischen Codes (C1) mit einer gewünschten Bandbreite auf Basis einer gewünschten Entfernungsmessungspräzision ausgelegt list.

15. Funknetzwerk (1) mit einer Vielzahl von Basisstationen (BS_{S1}, BS_{S2}) gemäß einem beliebigen der Ansprüche 8 bis 11.

## Revendications

1. Procédé de réalisation de mesures de distance pour localiser des terminaux mobiles (M1, M2) dans un réseau radio (1), le procédé comprenant :
attribution d'un créneau temporel (T) pour l'émission d'au moins un signal de mesure de distance (DMS1, DMS2) à au moins un terminal mobile (M1, M2) à localiser,
**caractérisé par** les étapes suivantes
émission, par les terminaux mobiles (M1, M2) du réseau radio (1) qui sont desservis par les stations de base (BSₛ₁, BSₛ₂, ...) d'une grappe de localisation (LC) susceptibles de recevoir l'au moins un signal de mesure de distance (DMS1, DMS2), de l'au moins un signal de mesure de distance (DMS1, DMS2) uniquement et d'aucun autre trafic de données pendant le créneau temporel (T) attribué.

2. Procédé selon la revendication 1, selon lequel les signaux de mesure de distance (DMS1, DMS2) des différents terminaux mobiles (M1, M2) sont émis avec des codes (C1, C2) différents.

3. Procédé selon la revendication 2, avec lequel les différents codes (C1, C2) sont des codes orthogonaux différents.

4. Procédé selon la revendication 3, comprenant en outre les étapes suivantes :
réception de signaux de mesure de distance (DMS1, DMS2) de différents terminaux mobiles (M1, M2) dans les stations de base (BSₛ₁, BSₛ₂,...) de la grappe de localisation (LC), et
attribution des signaux de mesure de distance (DMS1, DMS2) reçus aux différents terminaux mobiles (M1, M2) en se basant sur les différents codes (C1, C2).

5. Procédé selon la revendication 3 ou 4, selon lequel, pour un terminal mobile (M1, M2) spécifique, un code (C1, C2) spécifique, et notamment une largeur de bande à occuper par le code spécifique (C1, C2), est sélectionné en fonction d'une précision de mesure souhaitée de la distance.

6. Procédé selon l'une quelconque des revendications précédentes, selon lequel les signaux de mesure de distance (DMS1, DMS2) possèdent au moins une propriété qui permet de déterminer un instant d'arrivée à une station de base (BSₛ₁, BSₛ₂,...) réceptrice et/ou un temps de trajet du terminal mobile (M1, M2) à une station de base (BSₛ₁, BSₛ₂...) réceptrice.

7. Procédé selon l'une quelconque des revendications précédentes, selon lequel le créneau temporel (T) attribué est réservé périodiquement ou la réservation est déclenchée par l'une des stations de base (BSₛ₁, BSₛ₂,...) ou par l'un des terminaux mobiles (M1, M2).

8. Station de base (BSₛ₁) pour un réseau radio (1), comprenant :
des moyens d'ordonnancement (3) pour attribuer un créneau temporel (T) pour l'émission d'au moins un signal de mesure de distance (DMS1, DMS2) à au moins un terminal mobile (M1, M2) à localiser, et
des moyens de communication (7) pour indiquer le créneau temporel (T) attribué aux autres stations de base (BSₛ₂,...) d'une grappe de localisation (LC) qui sont susceptibles de recevoir l'au moins un signal de mesure de distance (DMS1, DMS2),
**caractérisée en ce que**
les moyens de communication (7) sont adaptés pour garantir que l'au moins un signal de mesure de distance (DMS1, DMS2) uniquement et aucun autre trafic de données n'est émis par les terminaux mobiles (M1, M2) de la grappe de localisation (LC) pendant le créneau temporel attribué (T).

9. Station de base selon la revendication 8, comprenant en outre :
des moyens d'attribution de code (6) pour attribuer différents codes (C1, C2), notamment différents codes orthogonaux, aux signaux de mesure de distance (DMS1, DMS2) des différents terminaux mobiles (M1, M2).

10. Station de base selon la revendication 9, avec laquelle les moyens d'attribution de code (6) sont adaptés pour sélectionner, pour un terminal mobile (M1) spécifique à localiser, un code (C1) spécifique, et notamment une largeur de bande à occuper par le code spécifique (C1), en fonction d'une précision de mesure souhaitée de la distance.

11. Station de base selon l'une quelconque des revendications 8 à 10, comprenant en outre des moyens de réception (9) pour recevoir des signaux de mesure de distance (DMS1, DMS2) de différents terminaux mobiles (M1, M2) et des moyens d'attribution (8) pour attribuer les signaux de mesure de distance (DMS1, DMS2) reçus aux différents terminaux mobiles (M1, M2) en se basant sur les différents codes (C1, C2).

12. Terminal mobile (M1) comprenant :
des moyens de réception (10) pour recevoir des informations indiquant un créneau temporel (T) pour émettre un signal de mesure de distance (DMS1),
des moyens de génération de code (11) pour générer un code (C1) spécifique afin de distinguer le signal de mesure de distance (DMS1) du terminal mobile (M1) des signaux de mesure de distance (DMS2, ...) des autres terminaux mobiles (M2, ...), **caractérisé par**
des moyens d'émission (12) pour émettre uniquement le signal de mesure de distance (DMS1) et aucun autre trafic de données dans le créneau temporel (T) attribué en utilisant le code (C1) spécifique.

13. Terminal mobile selon la revendication 12,
avec lequel les moyens de réception (10) sont adaptés pour recevoir des informations indiquant le code (C1) spécifique à générer par les moyens de génération de code (11).

14. Terminal mobile selon la revendication 12 ou 13,
avec lequel les moyens de génération de code (11) sont adaptés pour générer le code (C1) spécifique avec une largeur de bande souhaitée basée sur une précision de mesure souhaitée de la distance,

15. Réseau radio (1) comprenant une pluralité de stations de base (BSₛ₁, BSₛ₂) selon l'une quelconque des revendications 8 à 11.
